# EUROPEAN PATENT APPLICATION

(11) **EP 4 362 427 A1**
(43) Date of publication of application: **01.05.2024**
(21) Application number: 22204262.4
(22) Date of filing: 27.10.2022
(51) Int. Cl.: H04L 67/12, G06N 3/06

(54) **MACHINE LEARNING**

(71) Applicant: Nokia Technologies Oy, 02610 Espoo (FI)
(72) Inventor: MO, Fan, Cambridge, Cambridgeshire CB3 0FA (GB); CHATTERJEE, Soumyajit, West Bengal, Pin-743144 (IN); MALEKZADEH, Mohammad, Cambridge, Cambridgeshire CB3 0FA (GB); MATHUR, Akhil, Cambridge, Cambridgeshire CB3 0FA (GB)
(74) Representative: Swindell & Pearson Limited

(57) **Abstract**

A terminal apparatus comprising means for: capturing data; transmitting information indicative of computational resources available at the apparatus for neural network training; receiving an encoder, defining one or more layers of artificial neurons, to be used as an input portion of a neural network; receiving a predictor, defining one or more layers of artificial neurons, to be used as an output portion of the neural network; training the predictor, not the encoder, using at least some of the captured data; and performing inference on captured data using the neural network formed from the encoder and the predictor. A server apparatus comprising means for: receiving information indicative of computational resources available at a remote apparatus for neural network training; using the received information to partition a neural network into an encoder, defining one or more layers of artificial neurons, to be used as an input portion of the neural network and a predictor, defining one or more layers of artificial neurons, to be used as an output portion of the neural network; and sending the predictor to the remote apparatus and the encoder to the remote apparatus.

## Description

### TECHNOLOGICAL FIELD

Examples of the disclosure relate to machine learning, in particular machine learning using spatially distributed apparatuses that have low computational resources.

### BACKGROUND

Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example.

Artificial neural networks, for example with one or more hidden layers, model complex relationship between input vectors and output vectors.

It can take significant computational resources to perform training (learning) of a neural network. Apparatuses with low computational resources are not therefore used to perform training (learning) of a neural network.

The number of apparatuses with low computational resources is increasing, for example, because of an expansion of the Internet of Things. Examples of such apparatus include smart earbuds, rings, pens, badges, and tags. These devices, are often equipped with different sensors.

### BRIEF SUMMARY

According to various, but not necessarily all, examples there is provided an apparatus comprising:
means for capturing data;
means for transmitting information indicative of computational resources available at the apparatus for neural network training;
means for receiving an encoder, defining one or more layers of artificial neurons, to be used as an input portion of a neural network;
means for receiving a predictor, defining one or more layers of artificial neurons, to be used as an output portion of the neural network;
means training the predictor, not the encoder, using at least some of the captured data; and
means performing inference on captured data using the neural network formed from the encoder and the predictor.

In some but not necessarily all examples, training the predictor, not the encoder comprises training a neural network having an input portion formed from the encoder and an output portion formed from the predictor, while preventing training updates to the encoder and allowing training updates to the predictor.

In some but not necessarily all examples, back propagation from an output layer of the predictor is used to change weightings used at artificial neurons of the predictor but not weightings of the artificial neurons of the encoder.

In some but not necessarily all examples, training the predictor using at least some of the captured data consists of sparse training the predictor.

In some but not necessarily all examples, the encoder is larger than the predictor comprising more layers and/or more artificial neurons.

In some but not necessarily all examples the apparatus comprises:
means for performing inference on captured data using a forward-pass of the neural network;
means for categorizing the captured data, based on at least a forward-pass loss-based function of the neural network, into
   data for discarding,
   data for remote training,
   data for local training;
means for discarding the data categorized for discarding;
means for transmitting the data categorized for remote training;
means for training the predictor, not the encoder, using the data categorized for local training.

In some but not necessarily all examples, the means for categorizing is configured to perform the categorization based on:
a forward-pass loss function of the neural network;
a gradient of the forward-pass loss function of the predictor portion of the neural network.

In some but not necessarily all examples, the means for categorizing comprises:
means for determining that a forward-pass loss of the neural network is below a first threshold and, in response, categorizing the captured data as data for discarding; determining that a forward-pass loss of the neural network is above a second threshold, higher than the first threshold, and, in response, categorizing the captured data as data for transmission for remote training;
means for determining that a forward-pass loss of the neural network is above the first threhold and below the second threshold and that a gradient of a forward-pass loss of the neural network is above a third threshold and, in response, categorizing the captured data as data for remote training;
means for determining that a forward-pass loss of the neural network is above the first threhold and below the second threshold and that a gradient of a forward-pass loss of the neural network is below the third threshold and, in response, categorizing the captured data as data for training the predictor.

In some but not necessarily all examples the apparatus is configured as a wireless, sensor apparatus, comprising control circuitry, wireless transceiver circuitry and sensor circuitry, wherein the control circuitry is configured to perform inference on data captured by the sensor circuitry using the neural network formed from the received encoder and the received or trained predictor.

According to various, but not necessarily all, examples there is provided 10. An apparatus comprising:
means for receiving information indicative of computational resources available at a remote apparatus for neural network training;
means for using the received information to partition a neural network into an encoder, defining one or more layers of artificial neurons, to be used as an input portion of the neural network and a predictor, defining one or more layers of artificial neurons, to be used as an output portion of the neural network; and
means for sending the predictor to the remote apparatus and the encoder to the remote apparatus.

In some but not necessarily all examples the apparatus comprises: means for controlling an architecture of the neural network, controlling the number of nodes in layers of the neural network, in dependence upon the received indication of computational resources available at the remote apparatus for neural network training.

In some but not necessarily all examples the apparatus comprises: means for controlling partitioning of the neural network, the number of layers and/or number of nodes of the predictor, is dependent upon the received indication of computational resources available at the remote apparatus for neural network training.

In some but not necessarily all examples the apparatus comprises:
means for using the received indication of computational resources available at the remote apparatus for neural network training, to look-up, from a lookup table, parameters defining at least the predictor.

In some but not necessarily all examples the apparatus comprises:
means for using the received information to partition a neural network into an encoder, defining one or more layers of artificial neurons, to be used as an input portion of the neural network and a predictor, defining one or more layers of artificial neurons, to be used as an output portion of the neural network;
means for sending the predictor to the terminal apparatus to receive in reply a trained predictor and sending the encoder to the terminal apparatus.

In some but not necessarily all examples the apparatus comprises: means for sending the predictor to an access node apparatus and the encoder to the access apparatus to receive in reply a trained predictor and a trained encoder.

In some but not necessarily all examples the apparatus comprises:
means for receiving multiple encoders, defining one or more layers of artificial neurons, to be used as an input portion of a neural network and aggregating the multiple encoders to form an aggregated encoder;
means for receiving a plurality of predictors, defining one or more layers of artificial neurons, to be used as an output portion of a neural network and aggregating the multiple predictors to form an aggregated predictor; and
means for sending the aggregated predictor to at least a terminal apparatus for training and return and sending the aggregated encoder to the terminal apparatus and
means for sending the aggregated predictor to at least an access apparatus for training and return and sending the aggregated encoder to the access apparatus for training and return.

In some but not necessarily all examples the apparatus comprises:
means for performing federated learning for the neural network based on one or more predictors trained at the terminal apparatus and returned to the apparatus;
means for performing federated learning for the neural network based on one or more predictors trained at the access apparatus and returned to the apparatus; and
means for performing federated learning for the neural network based on one or more encoders trained at the access apparatus

In some but not necessarily all examples the apparatus iscomprised in or configured as a server apparatus.

According to various, but not necessarily all, examples there is provided a method comprising:
capturing data;
transmitting information indicative of computational resources available at the apparatus for neural network training;
receiving an encoder, defining one or more layers of artificial neurons, to be used as an input portion of a neural network;
receiving a predictor, defining one or more layers of artificial neurons, to be used as an output portion of the neural network;
training the predictor, not the encoder, using at least some of the captured data; and performing inference on captured data using the neural network formed from the encoder and the predictor.

According to various, but not necessarily all, examples there is provided a method comprising:
receiving information indicative of computational resources available at a remote apparatus for neural network training;
using the received information to partition a neural network into an encoder, defining one or more layers of artificial neurons, to be used as an input portion of the neural network and a predictor, defining one or more layers of artificial neurons, to be used as an output portion of the neural network; and
sending the predictor to the remote apparatus and the encoder to the remote apparatus.

According to various, but not necessarily all, examples there is provided a computer program comprising instructions that when executed by one or more processors causes the performance of the methods.

According to various, but not necessarily all, examples there is provided an apparatus comprising means for:
capturing data;
performing inference on captured data using a neural network;
categorizing the captured data into
   data for discarding
   data for transmission
   data for training at least a portion of the neural network,
based on
   at least a forward -pass loss-based function of the neural network

In some but not necessarily all examples, the apparatus comprises means for discarding the data categorized for discarding; transmitting the date categorized for transmitting; training at least a portion of the neural network using the data categorized for training at least a portion of the neural network.

In some but not necessarily all examples, categorization based ona forward-pass loss function of the neural network and a last-layer gradient of the forward-pas loss function of the neural network.

In some but not necessarily all examples, a forward-pass loss of the neural network below a first threshold categorizes the captured data as data for discarding;
a forward-pass loss of the neural network above a second threshold, higher than the first threshold, categorizes the captured data as data for transmission for remote training. Otherwise, . a gradient of a forward-pass loss of the neural network above a third threshold categorizes the captured data as data for transmission for remote training and below the third threshold categorizes the captured data as data for traning the predictor.

According to various, but not necessarily all, examples there is provided an apparatus (server) comprising means for:
receiving multiple encoders, defining one or more layers of artificial neurons, to be used as an input portion of a neural network and aggregating the multiple encoders to form an aggregated encoder;
receiving a plurality if predictors, defining one or more layers of artificial neurons, to be used as an input portion of a neural network and aggregating the multiple predictors to form an aggregated predictor; and
sending the aggregated predictor to at least a terminal apparatus for training and return and sending the aggregated encoder to the terminal apparatus.

In some but not necessarily all examples, the apparatus comprises means for sending the aggregated predictor to at least ana access apparatus for training and return and sending the aggregated encoder to the access apparatus for training and return.

In some but not necessarily all examples, the apparatus comprises means for performing federated learning for the neural network based on predictors trained at the terminal apparatus and returned to the apparatus.

In some but not necessarily all examples, the apparatus comprises means forperforming federated learning for the neural network based on predictors trained at the access apparatus and returned to the apparatus

In some but not necessarily all examples, the apparatus comprises means forperforming federated learning for the neural network based on encoder trained at the access apparatus.

In some but not necessarily all examples, the apparatus comprises means foraggregating heterogeneous predictors by using the heterogeneous predictors as teacher models for s student model

In some but not necessarily all examples, the apparatus comprises means for aggregating homogenous predictors by averaging.

In some but not necessarily all examples, the apparatus comprises means for receiving from each of multiple intermediate access apparatuses an encoder, defining one or more layers of artificial neurons, to be used as an input portion of a neural network trained by the intermediate node and a predictor, defining one or more layers of artificial neurons, to be used as an output portion of the neural network trained by the intermediate node;
receiving from multiple terminal nodes a predictor, defining one or more layers of artificial neurons, to be used as an output portion of the neural network trained by the terminal node;
aggregating the multiple encoders to form an aggregated encoder aggregating the multiple predictors and the plurality of predictors to form an aggregated predictor
sending the aggregated predictor and the aggregated encoder to the multiple intermediate nodes and the plurality of terminal nodes

According to various, but not necessarily all, examples there is provided examples as claimed in the appended claims.

Local training of the predictor only, enables the continuing use of apparatus with low computational resources.

Discarding some data reduces memory and/or transmission requirements. Transmitting some data enables the continuing use of an apparatus with low computational resources.

Local training enables the continuance of training in the temporary absence of communications for transmission

Local training of a predictor, rather than the whole neural network, enables the continuing use of an apparatus with low computational resources.

Training of an encoder at an access point on the transmitted data enables training of the whole neural network.

Collaborative federated training of the neural network across a hierarchical system improves training of the neural network

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2A shows another example of the subject matter described herein;
FIG. 2B shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein;

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

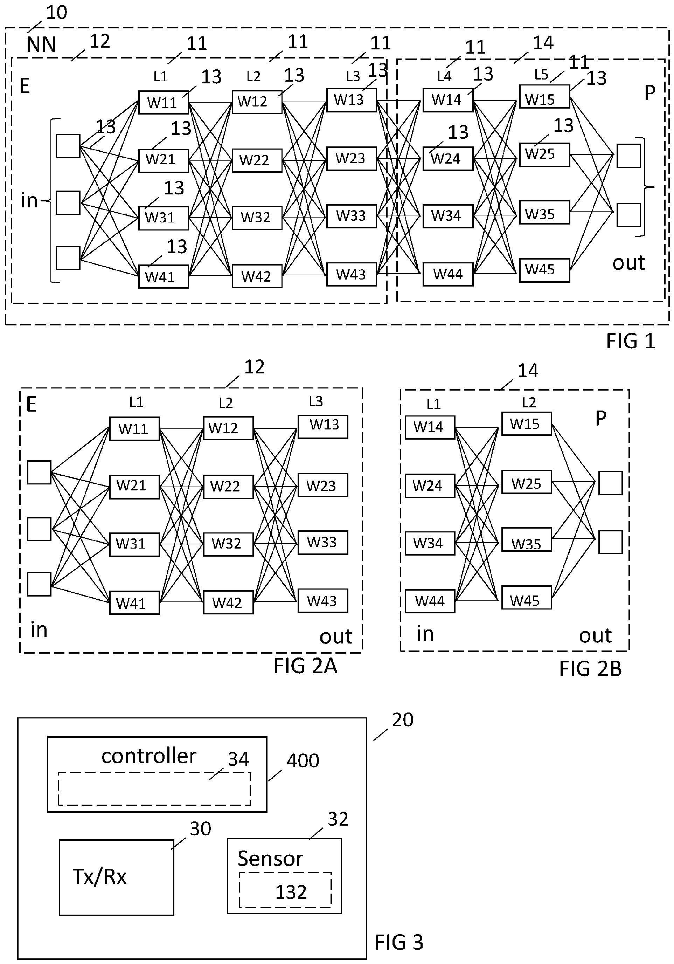

FIG 1 illustrates an example of an artificial neural network model (M) also known as a neural network'.

The neural network 10 comprising a plurality of nodes 13 arranged in layers 11. The layers include an input layer, an output layers and one or more intermediate or hidden layers between the input layer and the output layer. The network has a forward direction from input to output and a backwards direction from output to input.

The node in one layer is interconnected, separately, to each of the nodes in the preceding layer (if any) and is interconnected, separately, to each of the nodes in the following layer (if any). The neural network forms a directed, weighted graph. Each node has a weight that determines the strength of a nodes influence on a connected node in the forward direction.

Fig 1 illustrates a logical partitioning of the neural network 10 into two component parts- an encoder (E) 12 and a predictor (P) 14. The partition (cut) in the neural network 10 is between an output layer of the encoder 12 and an input layer of the predictor 14. The predictor 14 follows the encoder 12 in the forward direction.

Figs 2A and 2B illustrates partitioned parts of the neural network 10. FIG 2A illustrates an example of an encoder 12 of the neural network 10 illustrated in FIG 1. FIG 2B illustrates an example of a predictor 14 of the neural network 10 illustrated in FIG 1. It will be appreciated that as the position of the partition (cut) between layers 11 of the neural network 10 changes an architecture (number of layers 11) of the predictor 14 changes and an architecture (number of layers 11) of the encoder 12 changes.

The encoder 12 is itself a neural network having an input layer and an output layer. The encoder input layer is the same as the input layer of the neural network 10. The encoder 12 is an early-layers feature extractor. It encodes input data as discerning large-scale features.

The predictor 14 is itself a neural network having an input layer and an output layer. The predictor output layer is the same as the output layer of the neural network 10. The encoder 12 is a late-layers analyzer. It provides a prediction about the underlying task (that could be a classification, regression, or forecasting or any other type of inference-making functionality).

In at least some examples, the partitioning produces an encoder 12 that is larger than the predictor 14. For example, the partitioning can produce an encoder 12 that has more layers 11 than the predictor 14. For example, the partitioning can produce an encoder 12 that has more nodes 13 than the predictor 14.

In at least some examples, the partitioning produces a predictor 14 that is quite small and only has 1, 2 or 3 layers.

FIG 3 illustrates an example of a terminal apparatus 20.

In this example, the terminal apparatus 20 is a wireless, sensor terminal apparatus and comprises control circuitry 400, wireless transceiver circuitry 30 and sensor circuitry 32.

The control circuitry 400 is configured to perform inference on data 132 captured by the sensor circuitry 32 using the neural network 10 re-formed from an encoder 12 and a predictor 14.

The control circuitry 400 is configured to perform training of the predictor 14 but does not perform training of the encoder 12.

The terminal apparatus 20 has limited computational resources 34 available at the control circuitry 400. The computational resources 34 can for example include memory resources and/or processor resources. The control circuitry 400 can, in some examples, be a microcontroller with less that 1MB of on-board memory and with a processor clock speed of less than 64MHz.

In at least some examples, the predictor 14 has an architecture optimized for the computational resources 34 available at the terminal apparatus 20. In at least some examples, the predictor 14 has a form optimized for the computational resources 34 available at the terminal apparatus 20 for training a predictor 14. The optimization of the form of the predictor 14 can comprise controlling an architecture of the neural network 10. For example, it can comprise the number of layers 11 and/or number of nodes of the neural network 10. The optimization of the form can comprise controlling how the neural network 10 is partitioned. For example, it can comprise controlling the number of layers 11 in the predictor 14. For example, it can comprise the number of layers 11 and/or number of nodes 13 of the predictor 14

In some examples, the terminal apparatus 20 is always on. The terminal apparatus 20 can provide sensing coverage round the clock (temporal coverage). In some examples, the terminal apparatus 20 is movable. The terminal apparatus 20 can be moved freely (spatial coverage). It can therefore be desirable to prevent data captured by the sensing circuitry 32 over-running the available memory in the control circuitry 100. This could occur because of slow processing speed and/or lack of communications to upload data, for example.

The terminal apparatus 20 is a terminal point in a communication system. The terminal apparatus 20 is configured to communicate wirelessly using the transceiver circuitry 30. In some but not necessarily all examples, the transceiver circuitry 30 is a radio transceiver.

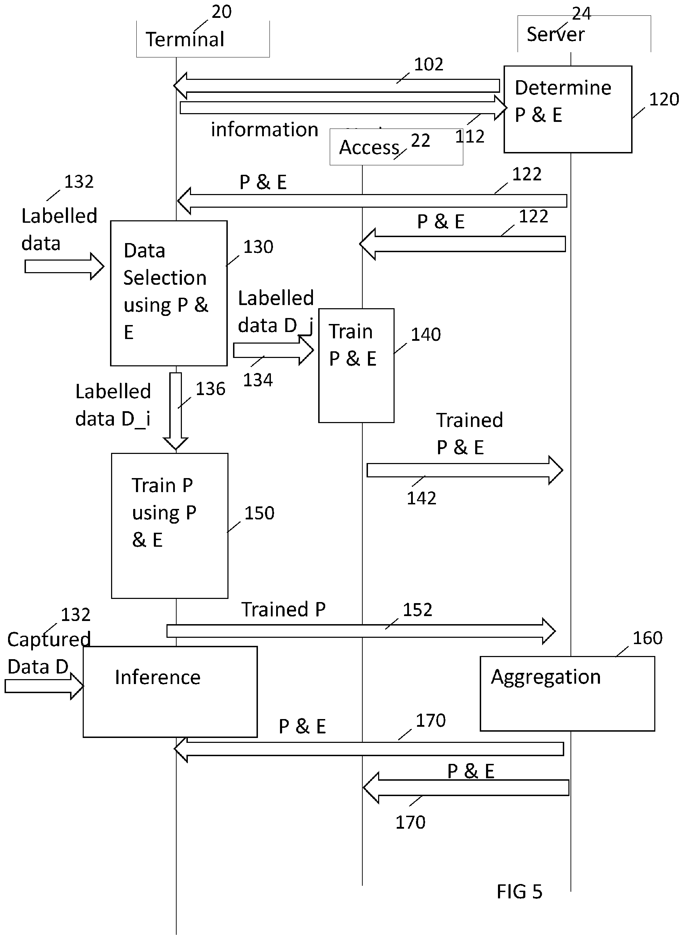

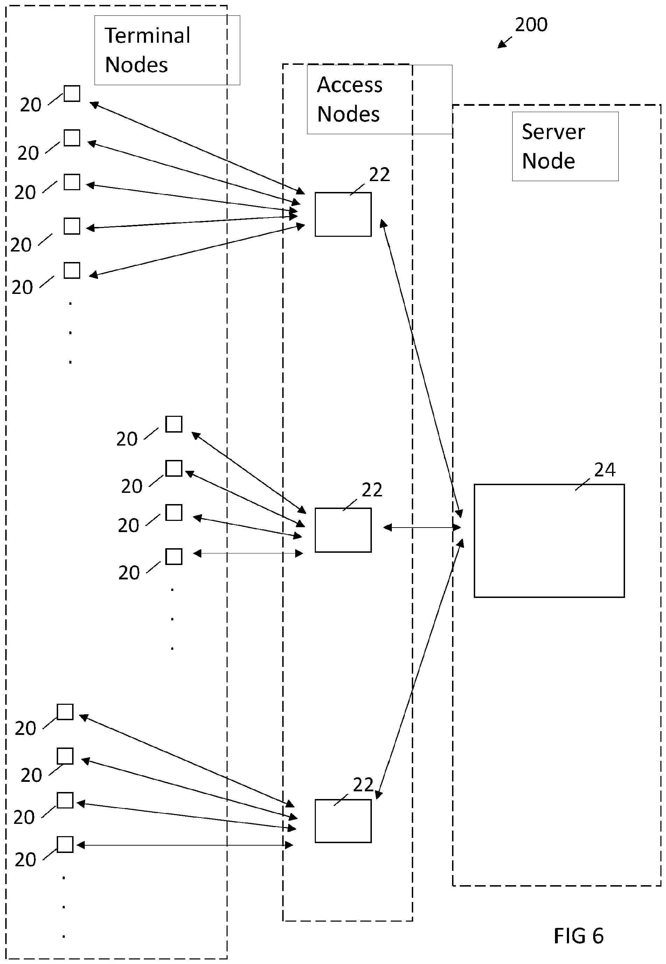

In some examples, the terminal apparatus 20 is a terminal point in communication with an access apparatus 22 (illustrated in FIGs 5 and 6). In some examples, the access apparatus 22 has greater computational resources than the terminal apparatus 20. In some examples the memory capabilities of the access apparatus 22 are more than 1000 times greater than the terminal apparatus 20. In some examples the processing clock speed of the access apparatus are more than 10-50 times greater than the terminal apparatus 20.

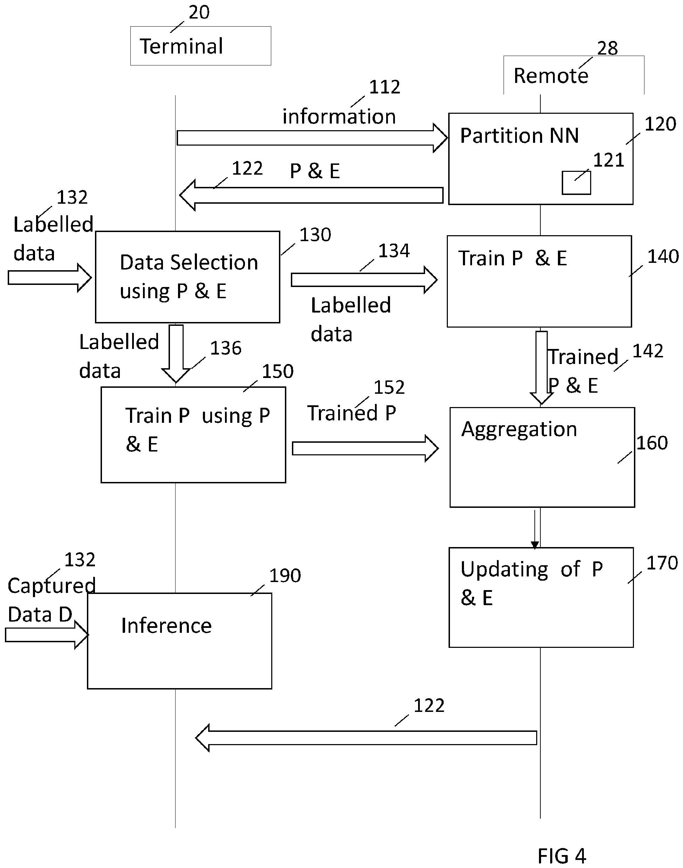

FIG 4 illustrates an example of a system comprising a terminal apparatus 20 and a remote system 28. The term remote indicates physically separation. The terminal apparatus 20 is therefore remote from the system 28 and the system 28 is remote from the terminal apparatus 20.

The terminal apparatus 20 transmits, to the system 28, information 112 indicative of computational resources 34 available at the terminal apparatus 20 for neural network training.

The system 28 receives the information 112 indicative of computational resources 34 available at the terminal apparatus 20 for neural network training. The system 28 determines 120 an encoder 12 and a predictor 14 which are sent to the terminal apparatus 20 in one or more transmission(s) 122. In this example, they are also trained 140 at the system 28.

The encoder 12, defines one or more layers 11 of nodes 13, to be used as an input portion of a neural network 10 and a predictor 14, defines one or more layers 11 of nodes 13, to be used as an output portion of the (same) neural network 10.

The system 28 uses the received information 112 to partition a neural network 10 into the encoder 12 and a predictor 14. The partitioning is controlled by the system based on the information 112. If the received information 112 changes, then the partitioning of the neural network changes. Consequently if the received information 112 changes, then the predictor 14 is changed.

The system 28 can use the received information 112 to partition the neural network 10 to produce a predictor 14 that is optimized for the terminal apparatus 20. For example, the system 28 can use the received information 112 to partition the neural network 10 to produce a predictor 14 that is optimized for being trained locally on the terminal apparatus 20 using the limited computation resources 34 available at the terminal apparatus 20 for neural network training. The computation resources 34 available at the terminal apparatus 20 for neural network training were previously indicated to the system 28 via the information 112.

The predictor 14 can be smaller than the encoder 12. For example, the encoder 12 can have more layers 11 and/or more nodes 13. For example, the predictor 14 can have less layers 11 and/or less nodes 13.

In at least some examples, the indicated computational resources 34 available at the remote terminal apparatus 20 for training a neural network 10 are sufficient to train the determined predictor 14, without training the encoder 12, by back propagation via the neural network 10 comprising the encoder 12 and the predictor 14 but are insufficient to train the predictor 14 and the encoder 12 simultaneously by back propagation via the neural network 10 comprising the encoder 12 and the predictor 14.

In at least some examples, the indicated computational resources 34 available at a remote apparatus for training a neural network 10 are sufficient to sparse train the predictor 14 but insufficient to sparse train the predictor 14 and the encoder 12 simultaneously by back propagation via a neural network 10 comprising the encoder 12 and the predictor 14.

In some examples, the system 28 controls an architecture of the neural network 10 in dependence upon the received information 112 indicative of computational resources 34 available at the terminal apparatus 20 for neural network training. For example, the system 28 controls the number nodes 13 in layers 11 of the neural network 10 and/or the number of layers 11.

In some examples, the system 28 controls partitioning of the neural network 10, in dependence upon the received information 112 indicative of computational resources 34 available at the remote apparatus for neural network training by controlling the number of layers 11 and/or number of nodes of the predictor 14.

In some examples the system 28 optionally uses the received indication of computational resources 34 available at the remote terminal apparatus 20 for neural network training, to look-up, from a lookup table 121, parameters defining at least the predictor 14.

In some examples, the system 28 controls all predictors 14 that it produces for the task performed by the neural network 10 to have the same input layer 11 and the same output layer 11. Thus predictors 14 that are subsequently aggregated can be aggregated without using bridging networks. In other examples, the predictors 14 are not so constrained and aggregation can, for example, use bridging networks or a bridging layer.

The system 28 sends the predictor 14 to the terminal apparatus 20 to receive in reply 152 a trained predictor 14 (after training 150 at the terminal apparatus 20) and sends the encoder 12 to the terminal apparatus. No encoder is trained or returned to the system 28 by the terminal apparatus 20.

The terminal apparatus 20 receives the encoder 12 and the predictor 14 via the transmission(s)122.

The terminal apparatus 20 can perform an optional selection 130 of labelled data 132.

The labels for data can be manually annotated by a user or they can be generated automatically from the context. For instance, users usually engage with some photos more than others by editing, sharing, labelling as a favorite. Or, for text autocompletion, users usually select one among several suggested ones.

In at least some examples, the terminal apparatus 20 performs inference on the labelled data 132 via a forward-pass of the neural network 10 and categorizes the captured data 132, based on at least a forward-pass loss-based function of the neural network 10. It categorizes the labelled data 132 into data 136 for local training and at least one other category. The other categories include data for discarding (not illustrated) and data 134 for remote training.

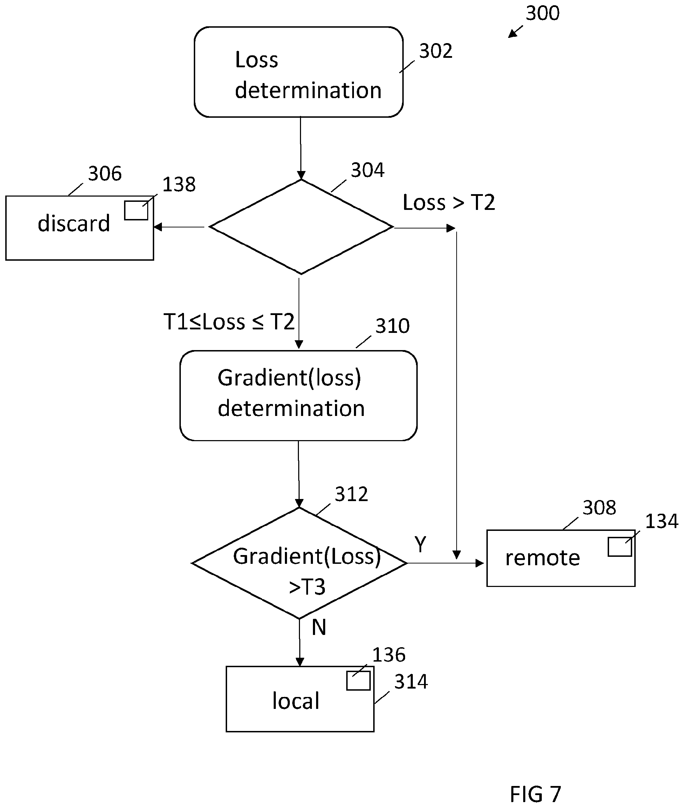

In the current example, the terminal apparatus 20 categorizes the labelled data 132 into data 136 for local training, data for discarding (not illustrated in this FIG) and data 134 for remote training. An example of a categorization process 300 is illustrated in FIG 7.

In that example, the terminal apparatus 20 categorizes the captured data 132, based on at least a forward-pass loss-based function of the neural network 10 into:
data 136 for local training, data 138 for discarding and data 134 for remote training.

The terminal apparatus 20 then discards 306 the data 138 categorized for discarding, transmits the data 134 categorized for remote training to the system 28 and locally trains the predictor 14, not the encoder 12, using the data 136 categorized for local training.

The data 134 categorized for remote training can be used by the system 28 to perform remote training 140 of at least an encoder 12.

Referring back to FIG 4, training 150 the predictor 14, not the encoder 12, at the terminal apparatus 20 comprises training the neural network 10 having an input portion formed from the encoder 12 and an output portion formed from the predictor 14, while preventing training updates to the encoder 12 and allowing training updates to the predictor 14. Back propagation from an output layer 11 of the predictor 14 (output layer of the neural network 10) is used to change weightings used at nodes 13 of the predictor 14 but not weightings of the nodes 13 of the encoder 12.

In at least some examples, training 150 the predictor 14 using at least some of the captured data 132 consists of sparse training the predictor 14. Back propagation from an output layer 11 of the predictor 14 is used to change weightings used at only a selected sub-set of nodes 13 of the predictor 14 but no weightings of the nodes 13 of the encoder 12. The selection of the sub-set of nodes 13 of the predictor 14 is a sparse selection. For example, the sub-set of nodes can be less than 20% of the nodes of the predictor 14, for example between 5% and 20%.

In the example illustrated the training 150 is performed on data (labelled data) 132 captured by the terminal apparatus 20. In the example illustrated the data 136 used for training is a categorized sub-set of the data 132.

The terminal apparatus 20 produces a trained predictor 14 (no trained encoder 12). The terminal apparatus sends 152 the trained predictor 14 to the system 28.

Meanwhile the system 28 is training 140 both the predictor 14 and the encoder 12 created by partitioning 120. This is in contrast to the terminal apparatus 20 which is training only the predictor 14.

Training 140 the predictor 14 and encoder 12 comprises training a neural network 10 having an input portion formed from the encoder 12 and an output portion formed from the predictor 14, while allowing training updates to the encoder 12 and allowing training updates to the predictor 14. Back propagation from an output layer 11 of the predictor 14 (the neural network 10) is used to change weightings used at nodes 13 of the predictor 14 and weightings of the nodes 13 of the encoder 12.

In the example illustrated the training is performed on data (labelled data) 134 provided by the terminal apparatus 20. In the example illustrated the data 134 is a product of selection 130 from a large set of data 132.

There is generally no requirement to use sparse training because of the good computational resources at the system 28. They are much better than the computational resources 34 at the terminal apparatus 20.

The system 28 produces 142 a trained predictor 14 and a trained encoder 12.

The system 28 performs aggregation 160 on at least the predictor 14 trained at the system 28 and the predictor 14 trained at the terminal apparatus 20 and received from the terminal apparatus 20 to form an aggregated predictor 14.

Each predictor 14 defines one or more layers 11 of nodes 13, to be used as an output portion of a neural network 10. The predictors 14 have the same architecture (same number of layers and same number of nodes) because the architecture was defined by partitioning 130 the neural network 10 and then training the same predictor 14 at the terminal apparatus 20 and at the system 28. The training in the example illustrated is independent because it is performed on different training data sets. The predictor 14 is trained at the terminal apparatus 20 on the data 136 and the predictor 14 is trained at the system 28 on the data 134. The data 136 and the data 134 are distinct, non-overlapping sets of data formed by exclusive selection 130.

Part of the process can then be repeated. The system 28 sends the aggregated predictor 14 to terminal apparatus 20 for terminal-based training 150 and return for aggregation 160 and uses the aggregated predictor 14 for system-based training 140 and return for aggregation 160. The returned predictors 14 are aggregated 160 to form an aggregated predictor 14 and the cycle repeats.

The system 28 can operate with multiple terminal apparatus 20. There can be independent training of multiple predictors 14 at different terminal apparatus 20. These independent trained predictors 14 can be returned for aggregation 160 to form a single aggregated predictor 14.

The system 28 can train a single encoder 12 using data 134 from the different terminal apparatus 20 or can independently train multiple encoders 12. Where multiple encoders 12 are trained by the system 28 they are aggregated to form an aggregated encoder 12.

Thus a new predictor 14 is created that has been trained by federated learning and a new trained encoder 12 is created. The new encoder 12 in some examples is also trained by federated learning.

The system 28 sends 122 the new predictor 14 and the new encoder 12 to the terminal apparatus 20, where the new predictor 14 will be trained and returned (the encoder 12 will not be trained or returned).

The system 28 makes the new predictor 14 available for independent training 140 by the system 28 and subsequent aggregation 160 and makes the new encoder 12 available for training 140 by the system and subsequent aggregation 160.

The system 28 is thus configured to perform federated learning for the neural network 10 based on one or more predictors 14 trained at the terminal apparatus 10 and returned to the system; perform federated learning for the neural network 10 based on one or more predictors 14 trained at the system 128; and perform federated learning for the neural network 10 based on one or more encoders 12 trained at the system 128

The terminal apparatus 20 is configured to perform inference 190 on captured data 132 using the neural network 10 formed from the encoder 12 and a predictor 14. The predictor used can be the predictor 14 received 122 from the system 28. The predictor used can be the predictor 14 trained at the terminal apparatus 20. In some examples, the predictor used is the trained predictor 14 as it is updated by training.

The information 112 indicative of computational resources 34 available at the terminal apparatus 20 for neural network training can be explicitly indicative of computational resources 34 available at the terminal apparatus 20 for neural network training or implicitly indicative of computational resources 34 available at the terminal apparatus 20 for neural network training.

The information 112 indicative of computational resources 34 available at the terminal apparatus 20 for neural network training can for example be indicative of resources 34 for back propagation and/or resources 34 for storing training data 132

Implicit indication of computational resources 34 available at the terminal apparatus 20 for neural network training uses one of a plurality of parameters to identify a terminal apparatus class. Different classes have different computational resources 34. Terminal apparatuses in the same class have the same or similar computational resources 34.

FIG 5 illustrates a system similar to that illustrated in FIG 4. The system 28 comprises a server 28 and an access apparatus 22

The functions described in FIG 6 relating to partitioning 120 and aggregation 160 are performed by the server 28.

The functions described in FIG 6 relating to training 140 (remote from the terminal apparatus 20) are performed at the access apparatus 22.

The server apparatus 24 comprises means for:
receiving information 112 indicative of computational resources 34 available at a remote apparatus for neural network training;
using the received information 112 to partition 120 a neural network 10 into an encoder 12, defining one or more layers 11 of nodes 13, to be used as an input portion of the neural network 10 and a predictor 14, defining one or more layers 11 of nodes 13, to be used as an output portion of the neural network 10; and
sending 122 the predictor 14 to a remote apparatus and the encoder 12 to the remote apparatus.

The server sends 122 the predictor 14 and the encoder 12 to the terminal apparatus 20 to receive in reply 152 a trained predictor 14.

The server sends 122 the predictor 14 and the encoder 12 to the access apparatus 22 to receive in reply 142 a trained predictor 14 and a trained encoder 12.

The server 24 can therefore comprise means for controlling an architecture of the neural network 10 as previously described and means for controlling partitioning of the neural network 10 as previously described.

The server 24 can comprise means for using the received indication of computational resources 34 available at the remote apparatus 20 for neural network training, to look-up, from a lookup table 121, parameters defining at least the predictor 14.

The access apparatus 22 trains 140 the predictor 14 and the encoder 12. Training the predictor 14 and encoder 12 comprises training a neural network 10 having an input portion formed from the encoder 12 and an output portion formed from the predictor 14, while allowing training updates to the encoder 12 and allowing training updates to the predictor 14. Back propagation from an output layer 11 of the predictor 14 is used to change weightings used at nodes 13 of the predictor 14 and weightings of the nodes 13 of the encoder 12. The trained predictor 14 and encoder 12 are sent 142 to the server 24.

In the example illustrated the training at the access apparatus 22 is performed on data (labelled data) 134 provided by the terminal apparatus 20. In the example illustrated the data 134 is a product of categorizing 130 a large set of data 132.

The server 24 receives a plurality if predictors 14, defining one or more layers 11 of nodes 13, to be used as an output portion of a neural network 10 and aggregates 160 the multiple predictors 14 to form an aggregated predictor 14. The multiple predictors 14 include a trained predictor 14 sent 152 from the terminal apparatus 20 and a trained predictor 14 sent 142 from the access apparatus 22.

The server 24 sends 170 the aggregated predictor 14 to at least an access apparatus 22 for training and return and to the terminal apparatus 20 for training and return.

The system can operate with multiple terminal apparatus 20 and multiple access apparatuses 22.

The predictors that are aggregated can therefore come from other terminal apparatus 20 and other access apparatus 22.

The server 24 can also receive encoders 12, defining one or more layers 11 of nodes 13, to be used as an input portion of a neural network 10 and aggregate the multiple encoders 12 to form an aggregated encoder 12.

The server 24 sends 170 the aggregated encoder 12 to the access apparatuses 22 for training and return and sends the aggregated encoder 12 to the terminal apparatuses 20 for use in inference (but not necessarily for training and return).

The server 24 therefore performs federated learning for the neural network 10 based on one or more predictors 14 trained at the terminal apparatus and returned to the server apparatus 24; performs federated learning for the neural network 10 based on one or more predictors 14 trained at the access apparatus 22 and returned to the server apparatus 24; and performs federated learning for the neural network 10 based on one or more encoders 12 trained at the access apparatus 22 and returned to the server apparatus 24.

The use of use of predictor training at the terminal apparatuses 20 and the access apparatuses 22 and training of the encoders 12 at the access apparatuses 22 provides a desirable trade-off between model performance (e.g., the accuracy of the trained model) and computational cost (e.g., battery and bandwidth consumption).

FIG 6 illustrates a hierarchical system comprising the server 24, multiple access apparatus 22 and a plurality of terminal apparatuses 20.

The server 24 communicates with one or more access apparatus 22. Each access apparatus 22 communicates with one or more associated terminal apparatus 20. The terminal apparatus 20 do not communicate directly with server apparatus 24. The terminal apparatus 20 communicate with server apparatus 24 only via the respective associated access apparatus 22.

FIG 7 illustrates an example of categorization 300 of data 132 by the terminal apparatus 20. The data 132 is, for example, data captured by the terminal apparatus 20.

The terminal apparatus 20 performs inference on the labelled data 132 via a forward-pass of the neural network 10 and categorizes the captured data 132, based on at least a forward-pass loss-based function of the neural network 10.

The data 132 is categorized as: data 136 for local training, data 138 for discarding or data 134 for remote training.

The terminal apparatus 20 then discards 306 the data 138 categorized for discarding, transmits the data 134 categorized for remote training to the remote system 28 and locally trains the predictor 14, not the encoder 12, using the data 136 categorized for local training. The data 134 categorized for remote training can be used by the remote system to perform remote training of at least an encoder 12.

The classification method 300 comprises loss determination 302. The terminal apparatus 20 performs inference on the labelled data 132 via a forward-pass of the neural network 10 and determines a forward-pass loss-based function of the neural network 10.

Then loss assessment 304 categorizes the data 132 as data 138 for discarding, data 132 for remote training and data for further assessment. If the loss is less than a first threshold T1, the data 132 that produced that loss is categorized as data 138 for discarding. If the loss is greater than a second threshold T2, the data 132 that produced that loss is categorized as data 132 for remote training. If the loss is greater than or equal to the first threshold T1 and less than or equal to the second threshold T2, then the data 132 that produced that loss is categorized as data for further processing.

The further processing comprises gradient (loss) assessment 312. The gradient of the loss is determined. This assessment is similar to an initial stage of back-propagation when training a neural network but the determination is performed only at the last layer of the predictor 14 (last layer of the neural network 10).

Then last-layer gradient(loss)assessment 312 categorizes the data 132 as data 132 for remote training and data 136 for local training. If the last-layer gradient(loss) is greater than a third threshold T3, the data 132 that produced that gradient is categorized as data 132 for remote training. If the last-layer gradient(loss) is less than or equal a third threshold T3, the data 132 that produced that gradient is categorized as data 136 for local training.

The terminal apparatus 20 can therefore perform as an independent process separate to training the predictor 14 categorization 300. The terminal apparatus 20 comprises means for performing inference on captured data 132 using a forward-pass of the neural network 10; categorizing the captured data 132, based on at least a forward-pass loss-based function of the neural network 10, into data 132 for discarding, data 132 for remote training, data 132 for local training;
discarding the data 132 categorized for discarding;
transmitting the data 132 categorized for remote training;
training the predictor 14, not the encoder 12, using the data 132 categorized for local training.

The categorizing means is configured to perform the categorization based on:
a forward-pass loss function of the neural network 10; and a gradient of the forward-pass loss function of the neural network 10.

In at least some examples, the categorizing means comprises means for: determining that a forward-pass loss of the neural network 10 is below a first threshold and, in response, categorizing the captured data 132 as data 132 for discarding; determining that a forward-pass loss of the neural network 10 is above a second threshold, higher than the first threshold, and, in response, categorizing the captured data 132 as data 132 for transmission for remote training; determining that a gradient of a forward-pass loss of the neural network 10 is above a third threshold and, in response, categorizing the captured data 132 as data 132 for remote training.

Data selection techniques offer a way for training different parts of a partitioned neural network 10 at different locations A reduced set of data 134 is transmitted through the system (for remote training) or stored for such transmission. A reduced set of data 136 is used for local training or stored for local on-device training. Some data 138 is discarded and not stored or used for local training or remote training. Data are selected based on whether they have already been learned or not (loss), and if not, whether they have new large-scale dominant features or not (gradient of loss).

Data that are not learned and have new large-scale dominant features to be learned will be transmitted to for remote training the encoder (e.g. at the access apparatus 22). Learned data will be discarded. The remaining data will be used to train the predictor 14 locally. Thus data that are not learned and do not have new large-scale dominant features will be used to train the predictor locally.

The mix of last-layer gradient norm and loss measure sample importance.

In some examples, all incoming data 132 are fed into the local model E and P to get loss values at least. These loss values are computed for free considering the terminal apparatus 20 are conducting real-time inference on incoming data 132. For the first training steps, all selected samples from data 132 are categorized as either DP (data to be used for only training the predictor locally) or as DM (data 134 to be used for training the whole model remotely). If no pre-trained encoder E exists, in the initial rounds of training we randomly choose some data point for DP and DM, until we converge to an acceptable state. The last-layer gradient norm is computed. This does not lead to high overhead as well because gradients are already produced during training the predictor 14. Both computed last-layer gradient norm and loss for incoming data samples are gathered to build gradient norm distribution and loss distribution, respectively, on the terminal apparatus 20. After building the two distributions with sufficient data, the terminal apparatus 20 starts data selection (categorization 300) based on distributions following steps:
i) for a data point with loss near 0, it is categorized as DN and then discarded. This corresponds to loss <T1 and the categorization of the data 132 as data 138 for discarding.
ii) for a data point with very high loss, it is categorized as DM. This corresponds to loss > T2 and the categorization of the data 132 as data 134 for remote training of the neural network 10.
iii) for the other data points (This corresponds to T1 ≤ loss ≤ T2) the terminal apparatus 20 computes the last layer gradient norm. A high value is categorized as DM. This corresponds to gradient(loss) > T3 and the categorization of the data 132 as data 134 for remote training of the neural network 10. A low value is categorized as DP. This corresponds to gradient(loss) ≤T3 and the categorization of the data 132 as data 136 for local training of the predictor 14 (only).

All norm and loss values of new incoming data are appended to distribution queues, and then old values are popped out. Using such a dynamic strategy with consideration of the mix of last-layer gradient norm and loss, this proposed data selection scheme achieves a better trade-off between computation cost and selection performance.

It first performs loss-based selection, by determining whether data samples have been learnt based on inference results (i.e., forward pass). Loss ang gradient of loss. Learnt samples are discarded. Not yet learnt samples are appended to DM. Data samples that are not sure will be fed into last-layer gradient norm-based selection to determine whether they have new features or not. Samples with new features are appended to DM. Samples without new features are appended to DP.

The process of aggregation can occur independently of the data categorization.

The server apparatus 24 comprises means for:
receiving multiple encoders 12, defining one or more layers 11 of nodes 13, to be used as an input portion of a neural network 10 and aggregating the multiple encoders 12 to form an aggregated encoder 12;
receiving a plurality if predictors 14, defining one or more layers 11 of nodes 13, to be used as an output portion of a neural network 10 and aggregating the multiple predictors 14 to form an aggregated predictor 14; and
sending the aggregated predictor 14 to at least a terminal apparatus for training and return and sending the aggregated encoder 12 to the terminal apparatus.

In the example illustrated, the server apparatus 24 also comprises means for sending the aggregated predictor 14 to at least an access apparatus 22 for training and return and sending the aggregated encoder 12 to the access apparatus 22 for training and return.

The server apparatus 24 is configured to perform federated learning for the neural network 10 based on predictors 14 trained at the terminal apparatus and returned to the apparatus.

The server apparatus 24 is configured to perform federated learning for the neural network 10 based on predictors 14 trained at the access apparatus 22 and returned to the apparatus

The server apparatus 24 is configured to perform federated learning for the neural network 10 based on encoder s12 trained at the access apparatuses 22

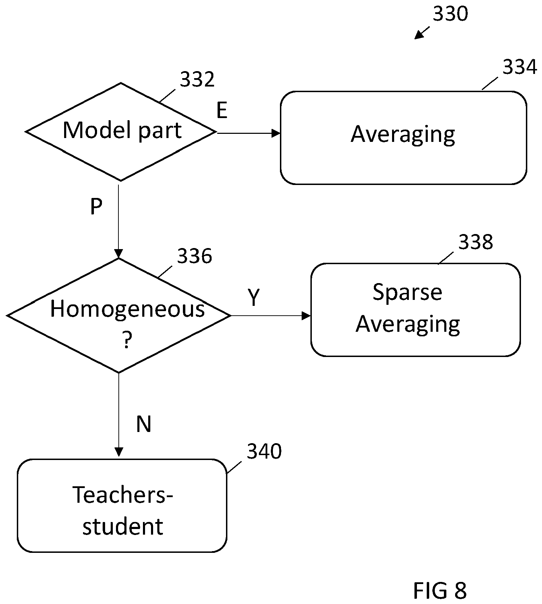

FIG 8 illustrates a method of federated learning 330. At stage 232, the method identifies the model part. If the model part is an encoder 12 it is aggregated by averaging 336. If the model part is a predictor 14 it is determined if it is homogeneous or heterogeneous with a predictor 14 that is being averaged at stage 334. If the predictor 14 is homogenous with an existing aggregating predictor 14, then it is aggregated with the aggregating predictor 14 by sparse averaging at stage 338. If the predictor 14 is heterogenous with all of the existing aggregating predictors 14 then it is aggregated by using it as a teacher in a teacher-student learning network at stage. 340.

The aggregation of heterogeneous predictors 14 can be achieved by using the heterogeneous predictors 14 as teacher models for a student model (the aggregated predictor 14).

The aggregation of homogeneous predictors 14 can be achieved by averaging equivalent weightings of nodes.

In some but not necessarily all examples, the server apparatus 24 receives from each one of multiple intermediate access apparatuses 22 an encoder 12, defining one or more layers 11 of nodes 13, to be used as an input portion of a neural network 10 trained by the intermediate access apparatus 22 and a predictor 14, defining one or more layers 11 of nodes 13, to be used as an output portion of the neural network 10 trained by the intermediate access apparatus 22. The server apparatus 24 receives from multiple terminal nodes a predictor 14, defining one or more layers 11 of nodes 13, to be used as an output portion of the neural network 10 trained by the terminal node.

The server apparatus 24 aggregates the multiple encoders 12 to form an aggregated encoder 12, aggregates the multiple predictors 14 and the plurality of predictors 14 to form an aggregated predictor 14. The server apparatus 24 then sends the aggregated predictor 14 and the aggregated encoder 12 to the multiple intermediate access apparatuses 22 and the plurality of terminal apparatuses 20.

Federated learning (FL) lets multiple clients collaboratively train one global model without sharing their data. In a conventional FL manner, all training computation will be required to conduct on terminal apparatuses 20. This will be extremely difficult due to the aforementioned challenges surrounding model training on terminal apparatuses 20.

Federated learning (FL), lets multiple apparatus collaboratively train a model without sharing their training data. There is separated training of model instances and then aggregation of the instances.

There is one of a plurality of possible predictor models determined for a terminal apparatus 20, for example based on its computational resource class.

Homogeneous aggregation can occur for predictors 14 associated with the same computational resource class. Heterogeneous aggregation can occur across the aggregated predictors 14 of the different classes

For predictors 14 with the same architecture or have the same layer, the aggregation can perform sparse-based aggregation directly on the server apparatus 24. Specifically, in each round, k terminal apparatuses 20 with the same predictor architecture are chosen. This k terminal apparatus 20 update their corresponding predictor on-device using *Dₚ* with sparse model training and share the sparse weights to the server apparatus 24 via their access apparatus 22. Essentially, this allows a group of k terminal apparatuses 20 (the clients) with same resource capabilities to update their predictors having the same architecture, which is facilitated by sparse training, and subsequently share the sparse weights to the server apparatus 24 (through their access apparatuses 22) when connected. Then the server apparatus 24 performs element-wise aggregation, i.e., merging the weights that have been sparsely updated into the exact locations among the architecture.

For predictors with different architectures, e.g., with only one layer but in different sizes, the teacher-student model training is used to transfer the knowledge among them. For each student model, multiple teacher models, equal to the number of different architectures we have, are used for knowledge transfer. This teaching follows a procedure that, for the outputs provided by the teacher models by feeding any input, the student model is further finetuned on the server to mimic the average of such generated outputs for its corresponding input. This helps to keep their predictor sizes to be intact but still learn from the others.

It will be appreciated from the foregoing that there is dynamic partitioning of the underlying machine learning model into two parts:
(1) an adaptive but lightweight predictor 14 to be trained on terminal apparatuses 20 (and also access apparatus 22);
(2) a compact but powerful encoder 12 to be trained on access apparatus 22 (not terminal apparatus 20).

There is therefor outsourcing of the computations for training the encoder 12from the terminal apparatus 20 to their upstream access apparatus 22.

Sparse training of the predictor 14 can comprises updating only when gradients exceed a threshold value. The backward pass can cause large memory footprints that exceed the maximum memory size of on terminal apparatuses 20. Sparse training overcomes such a problem by leveraging sparse model training and taking memory usage into consideration. Specifically, the predictor 14 on the terminal apparatus 20 it is trained in a sparse way where only important gradients are updated. To do so, firstly, the importance of gradients is measured with their magnitude and then ranked. To determine how many gradients are updated, a sparse rate will be calculated based on the device-specific memory budget. A low memory budget urges for a high sparse rate so that only a small portion of gradients need to be computed, and vice versa. Then, gradients are updated from the most important to the less. This sparse training fixes the predictor architecture on each terminal apparatus 20 so that the memory budget is taken into consideration. This makes sure that terminal apparatus 20 perform efficient training of predictors on-device. It also benefits the heterogeneous model aggregation on the server side as well.

The terminal apparatus 20 performs predictor (P) training for epochs. It first performs the forward pass on the full model (Encoder (E) and predictor (P)). It then performs the backward pass on the predictor (P) not the encoder (E), then measures the gradient importance, and finally updates the gradient to weights sparsely.

In at least some examples, the partitioning is done based on the underlying machine learning (ML) task and the available resource on the terminal apparatuses 20.

The partitioning of ML models into an encoder 12 and a predictor 14 is mainly done based on two factors:
(1) the underlying ML task and any constraints (e.g. latency, transmission time, etc.) and
(2) the available resource on the terminal apparatus 20 (such as memory, power, expected transmission latency)

More specifically, for an loT device, the predictor P is designed such that it can be trained on the loT device I within the deadline T with the available computational resources on I. To achieve this, formulate this entire problem as an optimization problem where the objective is to maximize the overall accuracy while reducing the memory footprint, size of the model, and latency of training the predictor on-device. The optimization finds the optimal model partitioning to split the initialized model into two parts: Encoder and Predictor.

A key capability is memory, that is, how big a model can to stored. Significant resources are required for the backward pass of training. The backward pass of training can consume 2-3 times more resources than inference.

Therefore, at the server apparatus 24, the process starts with a considerably well-trained encoder E, and then searches for predictor P suitable for the capability of the terminal apparatus 20. Participating terminal apparatus 20 upload their "device's resource information" and this is used to perform the model partitioning (before starting the federated training procedure).

Predictors 14 among different terminal apparatus 20 differ mostly in the number of dense layers and the neurons in each layer. For very small terminal apparatus 20, it is preferable to have one or two layers only, and the number of neurons of the layer(s) are adjusted.

In some examples, for larger terminal apparatus 20 that are capable of running more layers, the last layer will be the same.

The examples described have, inter alia, the following advantages

Model dynamically split into the encoder and a predictor based on the computation capability of on terminal apparatuses 20 on which the predictor gets trained.
- The encoder also gets trained which makes this solution more suitable for long-term usage by adapting to new features, and therefore, gains better model performance.

Computations are distributed among the terminal apparatus 20. and its upstream access points, which provides a tunable parameter, i.e., how much computation to outsource, for better trading off the computation and communication cost.

On-device personalization is always available when a terminal apparatus is not connected to the network, and the personalized predictor can be uploaded when the connection is back.
- Real-time data streaming for FL is supported because with the data selection, data that no need to learn are discarded.
- Data selection does not only identify learnable data but also determines whether the data contain new features. In such a way, data are categorized as three sets providing more efficient training.

The terminal apparatus 20 can be personal on-body devices (e.g., smart earbuds, rings, and shoes), at-the-house devices (e.g., smart lights, sockets, and mugs), or in-the-wild loT devices (e.g., battery-less environmental sensor units).

The terminal apparatus 20 can be connected to their access point (such as via BLE, Wi-Fi, LoRa, or Backscatter), but it is not always available/reliable considering the complexity of their surroundings. However, the data selection and the training of the predictor can still be run in an offline setting.

The access apparatus 22 communicates with terminal apparatuses 20 when the connection is on. These middle-point devices are the layers that allow the terminal apparatuses 20 to access the network. Example devices acting as the access apparatus 22 are smartphones of individuals, routers at the house, or some kinds of base stations. These access apparatus 22 have a much larger computation capability than the terminal apparatuses 20 and are thus responsible for training the encoder 12 which is the larger part of the ML model.

The top level is a central server 24, which acts as the initializer for model partitioning and the aggregator for orchestrating the federated learning procedure. It performs model aggregation on the predictor P trained on different terminal apparatus 20 and optionally also aggregation of the predictor P trained on the access apparatuses 22, as well as the encoders 12 trained on different middle-point access apparatus 22.

After aggregation, the server 24 distributes the predictor or encoder back for further updates. This procedure is repeated for several rounds to converge the predictor/encoder.

### Use Case 1:

In the first use-case scenario, we consider a digital health infrastructure for elderly people. Undoubtedly, bulky and large wearable devices (in terms of form factor) are not an appropriate choice for personalized health monitoring of elderlies. Thus, a more rational solution is to use lightweight on terminal apparatuses 20 embedded with specific physiological and locomotion sensors. These sensors can provide important information regarding critical accidents like unconsciousness, seizures, or loss of balance. Thus, a very task would be forecasting these accidents and subsequently triggering appropriate actions. Existing FL systems, however, cannot offer an effective and efficient solution for such vital applications. First, while the occurrence of such critical accidents is very rare, the forecasting model should continuously and efficiently collect and process sensory data. Second, not all devices are with the elderly all the time. Thus, the forecasting model should be adapted to run across several devices of different capabilities. Third, not only our personal devices should collaborate in enhancing their performance, but also different people should collaborate in enhancing the global forecasting model in a computation-efficient and privacy-preserving manner. Our proposed solution tackles these challenges by offering an efficient procedure including a novel on-device data selection strategy, effective knowledge sharing across devices and people, and improving the performance of the on-device forecasting model by personalization and federation. In this use case, the model partitioning can be done based on the type and usage of the device. For instance, for devices that elderlies use outdoor the accuracy of forecasting is much more important than those that are used in a safe indoor environment.

### Use Case 2:

Unmanned Aerial Vehicles (UAVs) based surveillance is something that is getting planned for better management during the time of crisis or monitoring in the wild. Typically, UAVs can be controlled from a dedicated control unit connected using an efficient data link which is used to transfer and receive sensor data (via a narrow bandwidth data channel) and commands (via the control channel) to and from the UAVs with the ground station (a.k.a. controlling unit). However, with the existing design challenges associated with deploying next-generation data-link connectivity, the next step for making UAVs more intelligent and effective can be through incorporating on-device intelligence. Many recent UAVs include sophisticated ML tools to detect targets and make rule-based decisions. Nevertheless, most of these tools are only for inference. Thus, for any previously unobserved context, the only options available are (1) relay all the sensor data to the ground unit for decision making or (2) simply ignore such conditions rendering the entire setup useless. Undoubtedly, both of these options restrict the application of UAVs where there can be intermittent connectivity with different critical scenarios to be resolved. Notably, this solution , for example,
1. can allow latency-sensitive on-device training of the predictors on the UAV for enhanced surveillance in such a scenario,
2. reduce the overall cost of communication to the ground unit by choosing only the most informative samples to train the powerful encoder present in the controlling units for a more generalized model, and finally,
3. improve the robustness of the overall model by aggregating information available from different UAVs deployed to manage the crisis.

### Use Case 3:

In the third use-case scenario, we consider human activity recognition where the user is mobile while carrying these on terminal apparatuses 20 (like a smartphone or an earbud). In such scenarios, while doing activities like jogging or running, the user may avoid carrying any companion device (like a smartphone) and would surely be out of the network coverage provided by the access-point present at home. In such a condition, these devices can help capture the newer activity patterns the user does not perform at home. However, being out of network coverage, these devices cannot send the data to the server for updating the model. Furthermore, as these devices have limited storage, an obvious choice is to drop the additional data, thus causing data loss. Interestingly, the proposed solution would still allow the devices to -- (a) intelligently select a portion of the data for personalized on-device model training of only the lightweight predictor on the on terminal apparatuses 20 while the user is still mobile, (b) judiciously choose specific portions of the captured data for storage while purging the unnecessary data and finally (c) facilitate generalized training of the encoder and model aggregation in the federated setup when the devices again connect to the network (or the access points).

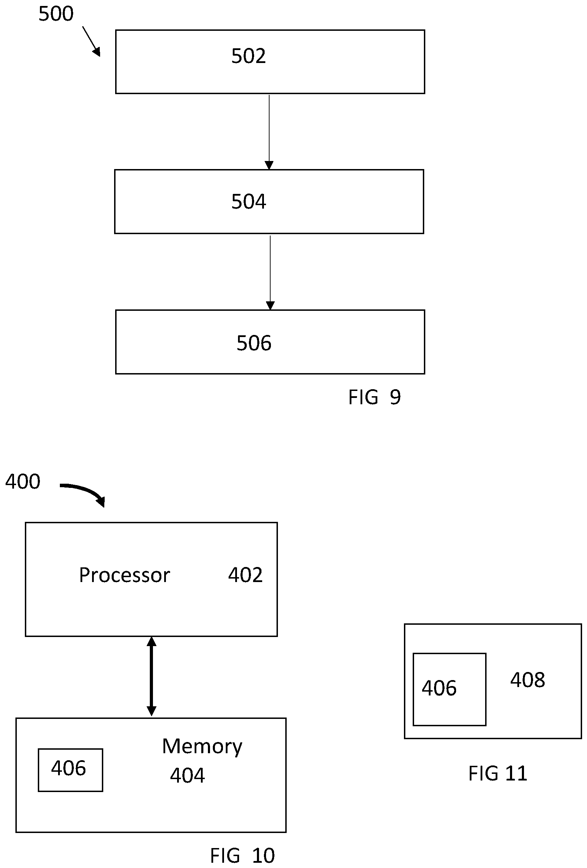

Fig 10 illustrates an example of a controller 400 suitable for use in an apparatus 20, 24. Implementation of a controller 400 may be as controller circuitry. The controller 400 may be implemented in hardware alone, have certain aspects in software including firmware alone or can be a combination of hardware and software (including firmware).

As illustrated in Fig 10 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 20, 24 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 20 comprises:
at least one processor 402; and
at least one memory 404 including computer program code,
the at least one memory storing instructions that, when executed by the at least one processor 402, cause the apparatus at least to:
   transmitting information indicative of computational resources available at the apparatus for neural network training;
   receiving an encoder, defining one or more layers of artificial neurons, to be used as an input portion of a neural network;
   receiving a predictor, defining one or more layers of artificial neurons, to be used as an output portion of the neural network;
   training the predictor, not the encoder, using at least some of the captured data; and performing inference on captured data using the neural network formed from the encoder and the predictor.

The apparatus 24 comprises:
at least one processor 402; and
at least one memory 404 including computer program code,
the at least one memory storing instructions that, when executed by the at least one processor 402, cause the apparatus at least to:
   receiving information indicative of computational resources available at a remote apparatus for neural network training;
   using the received information to partition a neural network into an encoder, defining one or more layers of artificial neurons, to be used as an input portion of the neural network and a predictor, defining one or more layers of artificial neurons, to be used as an output portion of the neural network; and
   sending the predictor to the remote apparatus and the encoder to the remote apparatus.

As illustrated in Fig 11, the computer program 406 may arrive at the apparatus 20, 24 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 20, 24 may propagate or transmit the computer program 406 as a computer data signal.

Computer program instructions for causing an apparatus 20 to perform at least the following or for performing at least the following:
transmitting information indicative of computational resources available at the apparatus for neural network training;
receiving an encoder, defining one or more layers of artificial neurons, to be used as an input portion of a neural network;
receiving a predictor, defining one or more layers of artificial neurons, to be used as an output portion of the neural network;
training the predictor, not the encoder, using at least some of the captured data; and performing inference on captured data using the neural network formed from the encoder and the predictor.

Computer program instructions for causing an apparatus 24 to perform at least the following or for performing at least the following:
receiving information indicative of computational resources available at a remote apparatus for neural network training;
using the received information to partition a neural network into an encoder, defining one or more layers of artificial neurons, to be used as an input portion of the neural network and a predictor, defining one or more layers of artificial neurons, to be used as an output portion of the neural network; and
sending the predictor to the remote apparatus and the encoder to the remote apparatus.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In some but not necessarily all examples, the apparatus 20 configured to communicate data from the apparatus 20, 24 with or without local storage of the data in a memory 404 at the apparatus 20 and with or without local processing of the data by circuitry or processors at the apparatus 20.

The data may, for example, be measurement data or data produced by the processing of measurement data.

The data may be stored in processed or unprocessed format.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long-range cellular radio links. The apparatus may comprise a communications interface such as, for example, a radio transceiver for communication of data.

The apparatus 20 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 20 where it may produce an output sensible to the subject such as an audio output, visual output or haptic output.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The terminal apparatus 22 and the access apparatus 24 can be the same device or can be different devices.

The access apparatus 24 and the server apparatus 24 can be the same device or can be different devices.

The terminal apparatus 20 can, for example, be an loT device, a sensor device, a camera, smart glasses, a smart ring, a domestic appliance, etc.

The access apparatus 22 can, for example, be a smart phone, a mobile communication device, a personal computer, a network access point, a home pod, a smart speaker, a television, a set-top box, a vehicle, a MCU (microcontroller unit), etc.

The server apparatus 24 can, for example, be a network a server computer, a base station, a network access point, a transmission-reception point in any combinations.

The terminal apparatus 22 can in some examples have significant computation resources but not be making those available for neural network training.

As used here 'module' refers to a unit or apparatus that excludes certain parts/components that would be added by an end manufacturer or a user. The apparatus 20, the apparatus 22, the apparatus 24 can be modules.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. Apparatus comprising:
means for capturing data;
means for transmitting information indicative of computational resources available at the apparatus for neural network training;
means for receiving an encoder, defining one or more layers of artificial neurons, to be used as an input portion of a neural network;
means for receiving a predictor, defining one or more layers of artificial neurons, to be used as an output portion of the neural network;
means training the predictor, not the encoder, using at least some of the captured data; and
means performing inference on captured data using the neural network formed from the encoder and the predictor.

2. An apparatus as claimed in claim 1, wherein training the predictor using at least some of the captured data consists of sparse training the predictor.

3. An apparatus as claimed in claim 1 or 2, comprising:
means for performing inference on captured data using a forward-pass of the neural network;
means for categorizing the captured data, based on at least a forward-pass loss-based function of the neural network, into
data for discarding,
data for remote training,
data for local training;
means for discarding the data categorized for discarding;
means for transmitting the data categorized for remote training;
means for training the predictor, not the encoder, using the data categorized for local training.

4. An apparatus as claimed in any preceding claim, wherein the means for categorizing is configured to perform the categorization based on:
a forward-pass loss function of the neural network;
a gradient of the forward-pass loss function of the predictor portion of the neural network.

5. An apparatus as claimed in any preceding claim, wherein the means for categorizing comprises:
means for determining that a forward-pass loss of the neural network is below a first threshold and, in response, categorizing the captured data as data for discarding;
determining that a forward-pass loss of the neural network is above a second threshold, higher than the first threshold, and, in response, categorizing the captured data as data for transmission for remote training;
means for determining that a forward-pass loss of the neural network is above the first threhold and below the second threshold and that a gradient of a forward-pass loss of the neural network is above a third threshold and, in response, categorizing the captured data as data for remote training;
means for determining that a forward-pass loss of the neural network is above the first threhold and below the second threshold and that a gradient of a forward-pass loss of the neural network is below the third threshold and, in response, categorizing the captured data as data for training the predictor.

6. An apparatus as claimed in any preceding claim configured as a wireless, sensor apparatus, comprising control circuitry, wireless transceiver circuitry and sensor circuitry, wherein the control circuitry is configured to perform inference on data captured by the sensor circuitry using the neural network formed from the received encoder and the received or trained predictor.

7. An apparatus comprising:
means for receiving information indicative of computational resources available at a remote apparatus for neural network training;
means for using the received information to partition a neural network into an encoder, defining one or more layers of artificial neurons, to be used as an input portion of the neural network and a predictor, defining one or more layers of artificial neurons, to be used as an output portion of the neural network; and
means for sending the predictor to the remote apparatus and the encoder to the remote apparatus.

8. An apparatus as claimed in claim 7, comprising means for controlling an architecture of the neural network, controlling the number of nodes in layers of the neural network, in dependence upon the received indication of computational resources available at the remote apparatus for neural network training. and/or comprising means for controlling partitioning of the neural network, the number of layers and/or number of nodes of the predictor, is dependent upon the received indication of computational resources available at the remote apparatus for neural network training.

9. An apparatus as claimed in any of claims 7 or 8 further comprising:
means for using the received information to partition a neural network into an encoder, defining one or more layers of artificial neurons, to be used as an input portion of the neural network and a predictor, defining one or more layers of artificial neurons, to be used as an output portion of the neural network;
means for sending the predictor to the terminal apparatus to receive in reply a trained predictor and sending the encoder to the terminal apparatus.

10. An apparatus as claimed in any of claims 7 to 9, further comprising means for sending the predictor to an access node apparatus and the encoder to the access apparatus to receive in reply a trained predictor and a trained encoder.

11. An apparatus as claimed in any of claims 7 to 10 comprising:
means for receiving multiple encoders, defining one or more layers of artificial neurons, to be used as an input portion of a neural network and aggregating the multiple encoders to form an aggregated encoder;
means for receiving a plurality of predictors, defining one or more layers of artificial neurons, to be used as an output portion of a neural network and aggregating the multiple predictors to form an aggregated predictor; and
means for sending the aggregated predictor to at least a terminal apparatus for training and return and sending the aggregated encoder to the terminal apparatus and
means for sending the aggregated predictor to at least an access apparatus for training and return and sending the aggregated encoder to the access apparatus for training and return.

12. An apparatus as claimed in any of claims 7 to 11, comprised in or configured as a server apparatus.

13. A method comprising:
capturing data;
transmitting information indicative of computational resources available at the apparatus for neural network training;
receiving an encoder, defining one or more layers of artificial neurons, to be used as an input portion of a neural network;
receiving a predictor, defining one or more layers of artificial neurons, to be used as an output portion of the neural network;
training the predictor, not the encoder, using at least some of the captured data; and performing inference on captured data using the neural network formed from the encoder and the predictor.

14. A method comprising:
receiving information indicative of computational resources available at a remote apparatus for neural network training;
using the received information to partition a neural network into an encoder, defining one or more layers of artificial neurons, to be used as an input portion of the neural network and a predictor, defining one or more layers of artificial neurons, to be used as an output portion of the neural network; and
sending the predictor to the remote apparatus and the encoder to the remote apparatus.

15. A computer program comprising instructions that when executed by one or more processors causes the performance of the method as claimed in claim 13 or claim 14.
